**Europäisches Patentamt**

(19) **European Patent Office**

**Office européen des brevets**

(11) **EP 0 234 362 B2**

(12) **NEUE EUROPÄISCHE PATENTSCHRIFT**

(45) Veröffentlichungstag und Bekanntmachung des Hinweises auf die Entscheidung über den Einspruch:
**08.09.1999 Patentblatt 1999/36**

(45) Hinweis auf die Patenterteilung:
**02.10.1991 Patentblatt 1991/40**

(21) Anmeldenummer: **87101623.4**

(22) Anmeldetag: **06.02.1987**

(51) Int. Cl.⁶: **C08G 18/08**, C08G 18/42, C08G 18/80, C09D 175/06

(54) **Verfahren zur Herstellung von Dispersionen von vernetzten Polymermikroteilchen in waessrigen Medien**

Process for the preparation of aqueous dispersions of cross-linked polymer particles

Procédé pour la préparation de dispersions aqueuses de particules de polymères réticulées

(84) Benannte Vertragsstaaten:
**AT BE CH DE ES FR GB IT LI NL SE**

(30) Priorität: **28.02.1986 DE 3606513**

(43) Veröffentlichungstag der Anmeldung:
**02.09.1987 Patentblatt 1987/36**

(73) Patentinhaber:
**BASF Coatings Aktiengesellschaft**
**48165 Münster (DE)**

(72) Erfinder:
• **Hille, Hans-Dieter**
  **D-5060 Bergisch-Gladbach (DE)**
• **Müller, Horst**
  **D-5000 Köln 80 (DE)**
• **Dobbelstein, Arnold**
  **D-4400 Münster (DE)**
• **Mayenfels, Peter**
  **D-4400 Münster (DE)**

(74) Vertreter:
**Münch, Volker, Dr. et al**
**Dres. Fitzner & Münch**
**Rechts- und Patentanwälte**
**Lintorfer Strasse 10**
**40878 Ratingen (DE)**

(56) Entgegenhaltungen:
**EP-A- 0 022 452      EP-A- 0 133 223**
**EP-A- 0 147 674      EP-A- 0 148 970**
**BE-A- 878 962        DE-A- 2 537 207**
**DE-A- 3 325 163      FR-A- 2 330 731**
**US-A- 4 171 391**

• **Roempp's Chemie-Lexikon, S. 1082 (8. Auflage; 1981)**

Bemerkungen:
Verbunden mit 87901425.6/0297096 (europäische Anmeldenummer/Veröffentlichungsnummer) durch Entscheidung vom 21.08.89.

Printed by Xerox (UK) Business Services
2.16.7/3.6

**Beschreibung**

Die Erfindung betrifft ein Verfahren zur Herstellung von Dispersionen von vernetzten Polymermikroteilchen in wäßrigen Medien.

Es ist ein erklärtes Ziel der Lackhersteller, den Anteil an organischen Lösungsmitteln in Beschichtungszusammensetzungen so weit wie möglich herabzusetzen.

Ein Weg zur Erreichung dieses Zieles besteht in der Entwicklung von wasserverdünnbaren Beschichtungszusammensetzungen.

Insbesondere auf dem Gebiet der Automobillackierung, aber auch in anderen Bereichen, besteht ein großes Interesse an wäßrigen Lacksystemen.

In der Automobillackierung haben sich Mehrschichtlackierungen des "Basecoat-Clearcoat"-Typs vor allem für Metalleffektlackierungen weitgehend durchgesetzt.

"Basecoat-Clearcoat"-Lackierungen werden hergestellt, indem nach Vorlackierung eines pigmentierten Basislackes und kurzer Ablüftzeit ohne Einbrennschritt (Naß-in-naß-Verfahren) ein Klarlack überlackiert wird und anschließend Basislack und Klarlack zusammen eingebrannt werden.

Es hat nicht an Versuchen gefehlt, zumindest die Basisschichten dieser Zweischichtsysteme aus wäßrigen Überzugszusammensetzungen herzustellen.

Die Überzugsmittel zur Herstellung dieser Basisschichten müssen nach dem heute üblichen rationellen "Naß-in-naß"-Verfahren verarbeitbar sein, d.h. sie müssen nach einer möglichst kurzen Vortrocknungszeit ohne Einbrennschritt mit einer (transparenten) Deckschicht überlackiert werden können, ohne störende Anlöseerscheinungen und "strike in"-Phänomene zu zeigen.

Bei der Entwicklung von Überzugsmitteln für Basisschichten von Metalleffektlacken müssen außerdem noch weitere Probleme gelöst werden. Der Metalleffekt hängt entscheidend von der Orientierung der Metallpigmentteilchen im Lackfilm ab. Ein im "Naß-in-naß"-Verfahren verarbeitbarer Metalleffekt-Basislack muß demnach Lackfilme liefern, in denen die Metallpigmente nach der Applikation in einer günstigen räumlichen Orientierung vorliegen und in denen diese Orientierung schnell so fixiert wird, daß sie im Laufe des weiteren Lackierprozesses nicht gestört werden kann.

Die Ersetzung der in den konventionellen Lacksystemen eingesetzten organischen Lösungsmittel zieht eine Reihe von Problemen nach sich.

So ist zum Beispiel die Rheologie (Viskositätsverlauf während der Applikation, Pseudoplastizität, Thixotropie, Verlauf und Ablaufeigenschaften) konventioneller Lacksysteme mit relativ einfachen Mitteln über das Abdunstverhalten der verwendeten organischen Lösungsmittel bzw. Lösungsmittelgemische gezielt zu steuern. Diese Möglichkeiten können bei wäßrigen Systemen nur in sehr eingeschränktem Umfang bzw. gar nicht genutzt werden.

Nun ist aber gerade bei der Herstellung qualitativ hochwertiger Mehrschichtlackierungen, insbesondere Metalleffektlackierungen, eine Steuerung der rheologischen Eigenschaften der eingesetzten Beschichtungszusammensetzungen von äußerst großer Wichtigkeit.

So wirkt sich z.B. ein schneller Viskositätsanstieg nach der Applikation sehr günstig auf die Orientierung und Fixierung der Metallpigmentteilchen in Metalleffekt-Basislacken aus.

Aber auch bei anderen Beschichtungsverfahren - insbesondere bei durch Spritzapplikation aufgetragenen Überzügen - hängt die Qualität der erhaltenen Beschichtungen in starkem Maße von den rheologischen Eigenschaften der verwendeten Beschichtungszusammensetzungen ab.

Es ist bekannt, daß die rheologischen Eigenschaften von wäßrigen Beschichtungszusammensetzungen durch Zugabe von vernetzten Polymermikroteilchen beeinflußt werden können.

Weiter ist bekannt, daß bei der Herstellung von Mehrschichtüberzügen des Basecoat-Clearcoat-Typs die obenerwähnten störenden Anlöseerscheinungen und strike-in-Phänomene zurückgedrängt werden, wenn Basisbeschichtungszusammensetzungen eingesetzt werden, die vernetzte Polymermikroteilchen enthalten.

So wird in der EP-A 38 127 ein Verfahren zur Herstellung mehrschichtiger Überzüge des Basecoat-Clearcoat-Typs offenbart, bei dem wäßrige Basisbeschichtungszusammensetzungen verwendet werden, die stabil dispergierte, vernetzte Polymermikroteilchen enthalten und einen pseudoplastischen oder thixotropen Charakter aufweisen.

Bei der Inkorporation von vernetzten Polymermikroteilchen in Beschichtungszusammensetzungen kann es zu Störungen kommen, die auf Unverträglichkeiten zwischen den Mikroteilchen und anderen Lackbestandteilen, insbesondere zwischen Mikroteilchen und den übrigen Bindemittelkomponenten zurückzuführen sind.

Wenn z.B. der Brechungsindex der vernetzten Polymermikroteilchen nicht sorgfältig auf den Brechungsindex der übrigen Bindemittelbestandteile abgestimmt wird, dann kommt es von infolge von Lichtstreueffekten zur Bildung von trüben Lackfilmen.

Untersuchungen haben gezeigt, daß wäßrige Beschichtungszusammensetzungen, die Polyurethane und gegebenenfalls auch noch Polyester als Hauptbindemittelbestandteile enthalten, sehr vorteilhafte Eigenschaften aufweisen und insbesondere für einen Einsatz als Basisbeschichtungszusammensetzungen in Zweischichtmetalleffektlackierungen des Basecoat-Clearcoat-Typs gut geeignet sind (vgl. z.B. US-PS-4,558,090).

Wenn in solche Beschichtungszusammensetzungen die in der EP 38127 als besonders geeignet herausgehobenen Mikroteilchen aus vernetzten Acrylpolymeren eingearbeitet werden, dann werden oft auf Unverträglichkeiten zwischen den Mikroteilchen und den übrigen Bindemittelkomponenten zurückzuführende Störungen, insbesondere Trübungserscheinungen in den erhaltenen Lackierungen beobachtet.

In der EP-A 38127 wird darauf hingewiesen, daß die vernetzten Polymermikroteilchen auch aus vernetzten Polykondensaten, wie z.B. vernetzten Polyestermikrogelteilchen bestehen können. Es wird aber auch bemerkt, daß es Schwierigkeiten bereiten kann, wirklich vernetzte Polykondensate, wie z.B. Polyester, herzustellen.

In der in der EP-A 38127 zitierten GB-A 1403794 wird ein Verfahren zur Herstellung von Dispersionen von Polymermikroteilchen in organischen Lösungsmitteln beschrieben, das sowohl auf Polymere, die über Polyadditions-, als auch auf Polymere, die über Polykondensationsreaktionen gewonnen werden, anwendbar sein soll.

Dieses Verfahren kann aber nur in den Fällen angewandt werden, in denen eines der Monomere bei der Polymerisationstemperatur fest und in dem organischen Reaktionsmedium schwer löslich ist und die eventuell noch vorhandenen übrigen Monomere in dem organischen Reaktionsmedium merklich löslich sind.

Im ersten Schritt des in der GB-A 1403794 offenbarten Verfahrens wird das feste, schwer lösliche Monomer mit Hilfe von Mahlprozessen in dem organischen Reaktionsmedium, das ein geeignetes Stabilisierungsmittel enthält, dispergiert. Dann wird die Dispersion, die gegebenenfalls noch weitere Monomere enthält, auf die Polymerisationstemperatur erhitzt. Die Polymerisation muß in Gegenwart eines das entstehende Polymer stabilisierenden Stabilisators durchgeführt werden.

Das in der GB-A 1403794 beschriebene Verfahren ist aus einer Reihe von Gründen für eine Synthese von vernetzten Polymermikrogelteilchen, die mit Aussicht auf Erfolg in wäßrigen Systemen anstelle von vernetzten Acrylpolymermikroteilchen eingesetzt werden könnten, nicht geeignet:

1) Das Verfahren ist äußerst aufwendig und liefert zunächst nur Dispersionen in organischen Medien, die nachträglich in wäßrige Dispersionen überführt werden müssen.

2) Die Monomerenauswahl ist durch die Bedingungen hinsichtlich des Schmelzpunktes und der Löslichkeit sehr stark eingeschränkt, und eine gezielte Synthese einer großen Palette von "maßgeschneiderten" Polymermikrogelteilchen ist nicht möglich.

3) Nach dem in der GB-A 1403794 beschriebenen Verfahren können keine wäßrigen Dispersionen von vernetzten Polymermikrogelteilchen mit einem Durchmesser, der unter einem Mikrometer liegt, hergestellt werden. (Wäßrige Dispersionen, die Teilchen mit einem Durchmesser von über 1 $\mu$m enthalten, zeigen Sedimentationserscheinungen und sind als Rheologiehilfsmittel im allgemeinen unbrauchbar und können zu Störungen im fertigen Lackfilm führen.)

Die der vorliegenden Erfindung zugrundeliegende Aufgabenstellung bestand darin, ein Verfahren zur Herstellung von Dispersionen von vernetzten Polymermikroteilchen in wäßrigen Medien bereitzustellen mit deren Hilfe die rheologischen Eigenschaften von wäßrigen Beschichtungszusammensetzungen beeinflußbar sind, die als Bestandteile in Basisbeschichtungszusammensetzungen des Basecoat-Clearcoat-Typs die oben erläuterten positiven Wirkungen zeigen und die mit möglichst wenig Aufwand insbesondere auf wäßrige Beschichtungszusammensetzungen, die Polyurethane und gegebenenfalls auch noch Polyester als Hauptbindemittelbestandteile enthalten, optimal abgestimmt werden können.

Diese Aufgabe wird überraschenderweise durch ein Verfahren zur Herstellung von Dispersionen von vernetzten Polymermikroteilchen in wäßrigen Medien gelöst, das dadurch gekennzeichnet ist, daß die Dispersionen hergestellt werden, indem

(1) ein Gemisch aus den Komponenten (A) und (B) in einem wäßrigen Medium dispergiert wird, wobei

- die Komponente (A) aus einem oder mehreren mindestens 2 Hydroxylgruppen enthaltenden Polyesterpolyol(en) und
- die Komponente (B) aus einer oder mehreren Polyisocyanatverbindungen, deren Isocyanatgruppen teilweise in blockierter Form vorliegen

besteht und wobei die Komponente (A) über eine zur Bildung einer stabilen Dispersion ausreichende Anzahl ionischer Gruppen, bevorzugt Carboxylatgruppen, verfügt und wenigstens ein Teil der Komponenten (A) und/oder (B) mehr als 2 Hydroxyl- bzw. gegebenenfalls blockierte Isocyanatgruppen pro Molekül enthält, und

(2) die so erhaltene Dispersion anschließend so hoch erhitzt wird, daß die Komponenten (A) und (B) zu vernetzten Polymermikroteilchen umgesetzt werden.

Mit Hilfe der erfindungsgemäß hergestellten Dispersionen können die rheologischen Eigenschaften wäßriger Beschichtungszusammensetzungen gezielt beeinflußt werden.

Für eine befriedigende Lösung der der vorliegenden Erfindung zugrundeliegenden Aufgabenstellung ist es erforderlich, daß der Durchmesser der in den Dispersionen enthaltenen vernetzten Polymermikroteilchen unter einem Mikrometer, bevorzugt zwischen 0,05 bis 0,2 μm liegt.

Ein großer Vorteil der erfindungsgemäß hergestellten Dispersionen ist darin zu sehen, daß die Teilchengröße der vernetzten Polymermikroteilchen mit einfachen Mitteln (z.B. über die Menge der in den Ausgangskomponenten (A) und (B) enthaltenen ionischen Gruppen) gesteuert werden kann und daß mühelos vernetzte Teilchen mit einem Durchmesser unter 1 μm, bevorzugt 0,05 bis 0,2 μm, erhalten werden können.

Daneben kann aber auch das Quellverhalten der vernetzten Teilchen auf einfache Weise innerhalb eines großen Rahmens gezielt beeinflußt werden.

Während bei den Polymermikroteilchen auf Basis von Vinylmonomeren im wesentlichen immer nur eine Modifizierung der Polymerseitenketten möglich ist, kann bei den erfindungsgemäß hergestellten Mikrogeldispersionen die Netzwerkstruktur der Teilchen durch gezielten Einbau bestimmter Kettensegmente beeinflußt werden.

Es ist bekannt, daß das Fließverhalten von wäßrigen Dispersionen u.a. stark von der Größe und dem Quellverhalten der in den Dispersionen enthaltenen Teilchen abhängig ist.

Eine innerhalb eines breiten Rahmens mit einfachen Mitteln durchführbare, gezielte Beeinflussung dieser beiden Parameter ist bei den zum Stand der Technik gehörenden wäßrigen Dispersionen, insbesondere Dispersionen auf Basis von Acrylpolymeren, nicht möglich.

Da die in den erfindungsgemäß hergestellten Dispersionen enthaltenen Polymermikroteilchen in ihrer chemischen Zusammensetzung innerhalb eines überaus großen Rahmens auf einfache Weise variierbar sind, können die erfindungsgemäß hergestellten Dispersionen mit einfachen Mitteln optimal auf die in den Beschichtungszusammensetzungen sonst noch enthaltenen Bindemittelkomponenten abgestimmt werden.

So lassen sich die erfindungsgemäß hergestellten Dispersionen zu wäßrigen Beschichtungszusammensetzungen verarbeiten, aus denen vor allem in den Fällen, in denen Polyurethane und gegebenenfalls auch noch Polyester als Hauptbindemittelbestandteile enthalten sind, Beschichtungen herstellbar sind, die ausgezeichnete optische Eigenschaften und keinerlei Trübungen aufweisen.

Beim Einsatz der erfindungsgemäß hergestellten Dispersionen in Basisbeschichtungszusammens, zur Herstellung von im Naß-in-naß-Verfahren applizierten Mehrschichtüberzügen des Basecoat-Clearcoat-Typs - insbesondere von Metalleffektlackierungen - werden ausgezeichnete Mehrschichtlackierungen erhalten, die keinerlei strike-in- und im Fall von Metalliclackierungen auch keine Wolkenbildungsphänomene und einen ausgezeichneten Metalleffekt zeigen.

Die besten Ergebnisse werden auch hier mit Beschichtungszusammensetzungen erzielt, die Polyurethane und gegebenenfalls auch noch Polyester als Hauptbindemittelkomponenten enthalten.

Es können aber auch mit anderen Bindemittelsystemen Ergebnisse erzielt werden, die oft besser sind als die, die mit Mikroteilchen auf Basis von Acrylpolymeren als einzige Mikroteilchenkomponente erzielbar sind.

In manchen Fällen hat es sich als vorteilhaft erwiesen, den Beschichtungszusammensetzungen Mikroteilchen aus Acrylpolymeren zuzumischen.

In "Aqueous Dispersions of Crosslinked Polyurethanes" (Tirpak & Markusch, Proc. 12th Waterborne and Higher Solids Coatings Symp., New Orleans 1985, 159-73) (I) wird eine Übersicht über die gebräuchlichen Techniken zur Herstellung von wäßrigen, unter anderem auch für Beschichtungszwecke einsetzbaren Polyurethandispersionen gegeben.

Weiter wird in (I) unter Bezugnahme auf die US-PS-3,870,684 von Versuchen zur Herstellung von Dispersionen vernetzter, harnstoffgruppenhaltiger Polymermikroteilchen in einem wäßrigen Medium berichtet, bei denen in wäßriger Phase dispergierte, endständige Isocyanatgruppen aufweisende Polyurethanionomere mit Polyaminen vernetzt werden. Dieses Verfahren ist auf die Verwendung von Polyaminen als Vernetzungsmittel beschränkt und ermöglicht nur die Herstellung von instabilen, sedimentierenden, redispergierbaren wäßrigen Dispersionen, die aus Teilchen mit einem Durchmesser von 1 bis 1000 μm bestehen.

Die US 3,870,684 enthält keinerlei Hinweise darauf, daß die dort offenbarten Dispersionen als Hilfsmittel im oben diskutierten Sinn in wäßrigen Beschichtungszusammensetzungen einsetzbar sind.

Nach dem erfindungsgemäßen Verfahren werden dagegen stabile wäßrige Dispersionen erhalten, die vernetzte Polymermikroteilchen enthalten, deren Durchmesser unter 1 μm, bevorzugt zwischen 0,05 bis 0,2 μm liegt.

Es ist selbstverständlich auch möglich, nach dem erfindungsgemäßen Verfahren Polymermikroteilchen herzustellen, deren Durchmesser über 1 μm liegt.

Nach (I) soll das in der US-PS-3,870,684 beschriebene Verfahren zu stabilen wäßrigen Dispersionen mit ausgezeichneten Filmbildungseigenschaften führen, wenn die endständige Isocyanatgruppen aufweisenden Polyurethanionomere durch Einführung von Polyoxyethylenblöcken modifiziert worden sind (vgl. US-PS-4,408,008).

Aber auch dieses Verfahren erlaubt nur in Ausnahmefällen eine reproduzierbare, kontrollierte Synthese von vernetzten Polymermikroteilchen, deren Durchmesser unter 1 μm liegt, und der Fachmann ist auch hier bei der Auswahl des Polyurethanionomers, das ja zwingend Polyoxyethyleneinheiten enthalten muß, eingeschränkt, wodurch die Möglichkeiten einer gezielten Anpassung der Polymermikroteilchen an das übrige Bindemittelsystem extrem eingeschränkt werden.

Die US-PS-4,293,679 beschreibt ein Verfahren zur Herstellung wäßriger Dispersionen vernetzter, harnstoffgruppenhaltiger Polymermikroteilchen, bei dem ein hydrophiles, freie Isocyanatgruppen aufweisendes Präpolymer, das aus einem mindestens zu 40 Gew.% aus Ethylenoxideinheiten bestehenden Polyol und einer Polyisocyanatverbindung hergestellt worden ist, in einem wasserlöslichen organischen Lösungsmittel gelöst und anschließend unter Rühren mit Wasser in großem Überschuß umgesetzt wird.

Bei diesem Verfahren hängt die Größe der entstehenden Teilchen ganz wesentlich von der Viskosität der Präpolymerlösung, der Rührgeschwindigkeit und dem Zusatz von oberflächenaktiven Substanzen ab.

Zur Herstellung von Teilchen mit einem Durchmesser $\leqq 1$ $\mu$m müssen relativ niedrig viskose Präpolymerlösungen mit hochleistungsfähigen Schnellrührern und unter Zusatz von oberflächenaktiven Substanzen verarbeitet werden.

Diese Verfahrensbedingungen bringen große Nachteile mit sich.

Es treten Probleme mit der Reproduzierbarkeit auf; die Verwendung von Schnellrührern ist mit großem technischen Aufwand verbunden, und der Zusatz von oberflächenaktiven Verbindungen beeinträchtigt die erzielbare Qualität der Beschichtungen.

Ein weiterer gravierender Nachteil des in der US-PS-4,293,679 offenbarten Verfahrens ist der, daß die einsetzbaren Präpolymere auf Substanzen beschränkt sind, die zu mindestens 40 Gew.% aus Ethylenoxideinheiten bestehen und einen stark hydrophilen Charakter haben.

Damit ist es dem Fachmann nicht mehr möglich, maßgeschneiderte Mikrogele darzustellen, weil er in der Wahl der Ausgangsverbindungen in einem hohen Maß festgelegt ist.

Außerdem führt der hohe Anteil an hydrophilen Molekülgruppierungen zu feuchtigkeitsempfindlichen Filmen.

Schließlich ist noch darauf hinzuweisen, daß auch in den beiden US-Patentschriften US-4,408,008 und US-4,293,679 keinerlei Hinweise darauf zu finden sind, daß die dort offenbarten Dispersionen als Hilfsmittel im oben diskutierten Sinn in wäßrigen Beschichtungszusammensetzungen einsetzbar sind.

Im folgenden soll das Erfindungsgemäßer Verfahren näher erläutert werden:

Der erste Schritt besteht in der Bereitstellung einer Mischung aus den Komponente (A) und (B), wobei darauf zu achten ist, daß die Komponente (A) über eine zur Bildung einer stabilen Dispersion ausreichenden Anzahl ionischer Gruppen, bevorzugt Carboxylatgruppen, verfügt und daß wenigstens ein Teil der Komponente (A) und/oder (B) mehr als 2 Hydroxyl- bzw. gegebenenfalls verkappte Isocyanatgruppen pro Molekül enthält.

Unter dem Begriff "stabile Dispersion" sind Dispersionen gemeint, in denen die dispergierten Teilchen erst nach der Applikation und der Abgabe des Dispergiermediums koagulieren.

In manchen Fällen kann es nützlich sein, außer ionischen Gruppen weitere stabilisierende Gruppen, wie z.B. Polyoxyalkylengruppen, in die Komponenten (A) und/oder (B) zu inkorporieren.

Es kann sowohl anionisch als auch kationisch stabilisiert werden, wobei die anionische Stabilisierung, bevorzugt über Carboxylatgruppen, bevorzugt ist.

Bevorzugterweise werden Gemische eingesetzt, in denen nur die (A) Komponente die zur Bildung einer stabilen Dispersion mit der jeweils gewünschten Teilchengröße notwendigen salzartigen bzw. zur Salzbildung befähigten Gruppierungen aufweist und die Komponente (B) frei von solchen Gruppierungen ist.

Die Ermittlung der für die Bildung einer stabilen Dispersion optimalen Konzentration an ionischen Gruppen in dem Gemisch aus den Komponenten (A) und (B) ist vom Durchschnittsfachmann mit Hilfe einfacher Routineuntersuchungen durchführbar. Die zur Bildung einer stabilen Dispersion in der Regel notwendige Konzentration an ionischen Gruppen liegt zwischen 0,01 bis 2 Milliäquivalenten pro Gramm Gemisch aus den Komponenten (A) und (B).

Die gegebenenfalls notwendige Neutralisierung von zur Salzbildung befähigten Gruppen mit Hilfe von Basen bzw. Säuren erfolgt vorzugsweise kurz vor der Dispergierung bzw. während der Dispergierung des aus den Komponenten (A) und (B) bestehenden Gemisches in dem wäßrigen Dispergiermedium.

Als zur Salzbildung befähigte Gruppen kommen vor allem Carboxyl- und Sulfonsäuregruppen in Betracht. Diese Gruppen werden bevorzugt mit einem tertiären Amin neutralisiert.

Geeignete tertiäre Amine zur Neutralisation der zur Anionenbildung befähigten Gruppen sind beispielsweise Trimethylamin, Triäthylamin, Dimethylanilin, Diäthylanilin, Triphenylamin, N,N Dimethylethanolamin, Morpholin und dergleichen.

Der Gehalt an ionischen Gruppen bzw. der Neutralisationsgrad der zur Salzbildung geeigneten Gruppierungen ist ein wichtiger Parameter, über den die Größe der entstehenden vernetzten Polymermikroteilchen gesteuert werden kann.

Bei der Bereitstellung des aus den Komponenten (A) und (B) zusammengesetzten Gemisches ist darauf zu achten, daß es vor der Dispergierung der Mischung in dem wäßrigen Dispergiermedium zu keinerlei Vorvernetzungsreaktionen zwischen den Komponenten (A) und (B) kommt.

Die Komponente (A) besteht aus einem oder mehreren mindestens 2 Hydroxylgruppen enthaltenden Polyesterpolyol(en).

Beispiele geeigneter Polyesterpolyole sind insbesondere die in der Polyurethanchemie an sich bekannten Umsetzungsprodukte von mehrwertigen Polyolen mit Polycarbonsäuren bzw. Polycarbonsäureanhydriden.

Zur Herstellung der Polyesterpolyole geeignete Polyole sind z.B. Ethylenglykol, Propandiol-1,2 und -1,3, Butandiol-1,3 und -1,4 die isomeren Pentandiole, Hexandiole oder Oktandiole, wie z.B. 2-Ethylhexandiol-1,3, Trimethylolpropan, Glycerin, Bishydroxymethylcyclohexan, Erythrit, Mesoerythrit, Arabit, Adonit, Xylit, Mannit, Sorbit, Dulcit, Hexantriol, (Poly-)Pentaerythritol usw.

Die zur Herstellung der Polyesterpolyole geeigneten Polycarbonsäuren bestehen in erster Linie aus niedermolekularen Polycarbonsäuren oder ihren Anhydriden mit 2-18 Kohlenstoffatomen im Molekül.

Di- und Tricarbonsäuren werden bevorzugt eingesetzt.

Geeignete Säuren sind beispielsweise Oxalsäure, Bernsteinsäure, Fumarsäure, Phthalsäure, Isophthalsäure, Terephthalsäure, Tetrahydrophthalsäure, Hexahydrophthalsäure, Adipinsäure, Acelainsäure, Sebacinsäure, Maleinsäure, Glutarsäure, Hexachlorheptandicarbonsäure, Tetrachlorphthalsäure und Trimellithsäure. Anstelle dieser Säuren können auch ihre Anhydride, soweit diese existieren, eingesetzt werden.

Es können auch Polyesterpolyole als Komponente (A) eingesetzt werden, die durch Polymerisation von Laktonen hergestellt worden sind.

Besonders gute Resultate sind mit Polyesterpolyolen erzielt worden, deren Moleküle im Durchschnitt je eine Carboxylatgruppe und mindestens zwei, bevorzugt mehr als zwei Hydroxylgruppen tragen.

Die (A) Komponente wird bevorzugterweise so ausgewählt, daß sie für sich alleine in dem wäßrigen Medium stabil dispergiert werden kann. Die Zusammenhänge zwischen dem Aufbau von Polyesterpolyolen (Säurezahl, Molekulargewicht ...) und deren Dispergierverhalten sind dem Durchschnittsfachmann gut bekannt und er kann mit Hilfe einiger weniger orientierender Vorversuche die zur Lösung der jeweiligen Problemstellung optimale Polyesterpolyolkomponente auswählen.

In den Fällen, in den die Komponente (B) für sich alleine in dem wäßrigen Medium stabil dispergiert werden kann, können auch Polyesterpolyole verwendet werden, die für sich allein nicht ohne weiteres in dem wäßrigen Medium stabil dispergierbar sind.

Es ist auch möglich, den als (A) Komponente eingesetzten Polyesterpolyolen noch weitere Verbindungen zuzusetzen, die gegenüber Isocyanatgruppen reaktive Gruppen enthalten. Dabei ist sorgfältig darauf zu achten, daß die aus den Komponenten gebildete Mischung in dem wäßrigen Medium stabil dispergierbar bleibt und daß die aus dieser Dispersion gebildeten vernetzten Polymermikroteilchen die gewünschte Größe aufweisen.

Als Beispiele für Verbindungen, die zu den die Komponente (A) bildenden Polyesterpolyolen zugesetzt werden können, seien die in der Polyurethanchemie an sich bekannten Polyetherpolyole genannt.

Als Komponente (B) werden Polyisocyanatverbindungen eingesetzt, deren Isocyanatgruppen teilweise in blokkierter Form vorliegen.

Als Blockierungsmittel kommen im Prinzip alle aus der Isocyanatchemie bekannten Blockierungsmittel in Frage.

Ganz besonders bevorzugte Blockierungsmittel sind jedoch die Diester der Malonsäure mit $C_1$-$C_8$-Alkanolen wie Methanol, Ethanol, n-Propanol, n-Butanol, Isobutanol, n-Hexanol, n-Oktanol oder Isooktanol, mit cycloaliphatischen Alkoholen, wie Cyclopentanol oder Cyclohexanol, und auch mit araliphatischen Alkoholen, wie Benzylalkohol oder 2-Phenylethanol.

Unter den Malonsäurediestern wird der Malonsäurediethylester als ganz besonders bevorzugtes Blockierungsmittel verwendet.

Als Polyisocyanatkomponenten kommen im Prinzip alle Isocyanatgruppen enthaltenden organischen Verbindungen in Frage. Als Beispiele seien genannt: Trimethylendiisocyanat, Tetramethylendiisocyanat, Pentamethylendiisocyanat, Hexamethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis-(4-isocyanatophenyl)-methan, 4,4'-Diisocyanatodiphenylether und 2,3-Bis-(8-isocyanatooctyl)-4-octyl-5-hexyl-cyclohexen.

Es ist auch möglich, isocyanatgruppenhaltige Präpolymere als Polyisocyanatkomponenten einzusetzen.

Beispiele für geeignete Präpolymere sind Reaktionsprodukte aus Polyisocyanaten, Polyether- und/oder Polyesterpolyolen, gegebenenfalls üblichen Kettenverlängerern und gegebenenfalls Verbindungen, die vorzugsweise zwei gegenüber Isocyanatgruppen reaktive Gruppen und eine salzartige oder zur Salzbildung befähigte Gruppe enthalten.

Besonders gut geeignete Präpolymere sind Präpolymere, die hergestellt worden sind, indem aus Polyether- und/oder Polyesterdiolen, Diisocyanaten, gegebenenfalls üblichen Kettenverlängerern und Verbindungen, die zwei gegenüber Isocyanatgruppen reaktive Gruppen und mindestens eine zur Anionenbildung befähigte Gruppe Aufweisen (z.B. Dihydroxypropionsäure, Dimethylolpropionsäure, Dihydroxybernsteinsäure, Dihydroxybenzosäure, $\alpha$, $\delta$, Diaminovaleriansäure, 3,4-Diaminobenzosäure, 2,4-Diamino-Toluol-Sulfonsäure-(5), 4-4'-Diamino-Diphenylethersulfonsäure

6

EP 0 234 362 B2

und dergleichen), ein endständige Isocyanatgruppen aufweisendes Zwischenprodukt hergestellt worden ist, dessen freie Isocyanatgruppen anschließend mit einem mindestens 3 Hydroxylgruppen enthaltenden Polyol, vorzugsweise Triol, insbesondere Trimethylolpropan, weiter umgesetzt worden sind.

Bei der vorliegenden Erfindung werden die Polyisocyanatkomponenten bevorzugt eingesetzt, deren Isocyanatgruppen an (cyclo)aliphatische Reste gebunden sind und die zumindest teilweise mit Malonsäurediester, bevorzugt Malonsäurediethylester, blockiert sind.

Die Verwendung von Verbindungen dieses Typs als (B)-Komponenten bringt den großen Vorteil mit sich, daß die in dem wäßrigen Dispergiermedium durchgeführte Umsetzung der Komponenten (A) und (B) unter Normalbedingungen durchgeführt werden kann, weil die Abspaltung der Blockierungsmittel unter 100°C erfolgt.

Polyisocyanatverbindungen, die an aromatische Gruppen gebundene, teilweise mit Malonsäurediestern blockierte Isocyanatgruppen enthalten, werden nur in Ausnahmefällen bei Verwendung spezieller Katalysatoren unterhalb 100°C deblockiert.

Die Verwendung von (B)-Komponenten, deren Blockierungsmittel erst bei Temperaturen über 100°C abgespalten werden, ist prinzipiell möglich, ermöglicht aber nicht mehr die besonders einfache Durchführung des Verfahrens unter Normalbedingungen, sondern erfordert Apparaturen, in denen die Umsetzung der Komponenten (A) und (B) unter erhöhtem Druck durchgeführt werden kann.

Die Komponente (B) wird in an sich bekannter Weise durch Umsetzung der Polyisocyanatkomponente mit dem Blockierungsmittel hergestellt.

Je nach Reaktivität der (B)-Komponente gegenüber der (A)-Komponente und Wasser ist es für eine problemlose Teilchenbildung und Vernetzungsreaktion in vielen Fällen ausreichend, wenn nur ein Teil der in der Komponente (B) vorhandenen Isocyanatgruppen in blockierter Form vorliegt.

Die Blockierung mit den ganz besonders bevorzugten Malonsäurediestern wird in an sich bekannter Weise (vgl. DE-OS-2342603 oder DE-OS-2550156) mit Hilfe basischer Katalysatoren, wie z.B. Natriumphenolat, Natriummethylat oder anderen Alkalialkoholaten durchgeführt.

Durch das Molverhältnis der Komponenten (A) und (B) und die Anzahl der in den Komponenten (A) und (B) enthaltenen gegenüber Isocyanatgruppen reaktiven Gruppen bzw. verkappten Isocyanatgruppen sowie die zur Herstellung der vernetzten Polymermikroteilchen gewählten Reaktionsbedingungen kann die Vernetzungsdichte der entstehenden Polymermikroteilchen beeinflußt werden.

Die Vernetzungsdichte wiederum korreliert in starkem Maße mit den rheologischen Eigenschaften der entstehenden Dispersionen.

So kann z.B. eine Abnahme des Vernetzungsgrades zu einem stärkeren Quellvermögen der Polymermikrogelteilchen und daraus resultierend zu einer Steigerung des pseudoplastischen Fließverhaltens der gebildeten Dispersionen führen.

Das Quellverhalten der Polymermikrogelteilchen kann auch über die chemische Natur der Komponenten (A) bzw. (B) gesteuert werden (Einbau von mehr oder weniger hydrophilen Molekülsegmenten; Einbau von mehr oder weniger starren Molekülteilen).

Besonders bevorzugte Gemische aus den Komponenten (A) und (B) bestehen aus Polyesterpolyolen, deren Moleküle im Durchschnitt je eine Carboxylgruppe und mindestens drei Hydroxylgruppen tragen und Triisocyanatverbindungen, deren Isocyanatgruppen an (cyclo)aliphatische Reste gebunden sind und die zumindest teilweise mit Malonsäurediester, bevorzugt Malonsäurediethylester, blockiert sind.

Das aus den Komponenten (A) und (B) bestehende Gemisch kann in Substanz in dem wäßrigen Dispergiermedium dispergiert werden.

Es ist jedoch vorteilhafter, die Komponenten (A) und (B) in einem mit Wasser mischbaren, gegenüber Isocyanatgruppen inerten, vorzugsweise unter 100°C siedenden organischem Lösungsmittel zu lösen bzw. zu dispergieren und dann diese Lösung oder Dispersion in dem wäßrigen Dispergiermedium zu dispergieren.

Als Lösungs- bzw. Dispergiermittel für das aus den Komponenten (A) und (B) bestehende Gemisch sind prinzipiell alle mit Wasser mischbaren und gegenüber Isocyanatgruppen inerten organischen Lösungsmittel verwendbar.

Vorteilhafterweise werden organische Lösungsmittel mit einem Siedepunkt unter 100°C verwendet. Besonders gute Resultate können mit Aceton und Methylethylketon erhalten werden.

Das wäßrige Dispergiermedium, in dem die Mischung aus (A) und (B) dispergiert wird, besteht aus Wasser, das auch noch organische Lösungsmittel enthalten kann. Als Beispiele für Lösungsmittel, die im Wasser vorhanden sein können, seien heterocyklische, aliphatische oder aromatische Kohlenwasserstoffe, ein- oder mehrwertige Alkohole, Ether, Ester und Ketone, wie z.B. N-Methylpyrrolidon, Toluol, Xylol, Butanol, Ethyl- und Butylglykol sowie deren Acetate, Butyldiglycol, Ethylenglykoldibutylether, Ethylenglykoldiethylether, Diethylenglykoldimethylether, Cyclohexanon, Methylethylketon, Aceton, Isophoron oder Mischungen davon genannt.

Nach Überführung des aus (A) und (B) bestehenden Gemisches in das wäßrige Dispergiermedium wird eine stabile wäßrige Dispersion erhalten, die aus Teilchen besteht, deren Größe durch gezielte Variation der oben diskutierten Parameter beeinflußbar ist. Anschließend wird die so erhaltene Dispersion so hoch erhitzt, daß die Komponenten

7

(A) und (B) zu vernetzten Polymermikroteilchen umgesetzt werden.

Es ist überraschend, daß nach dem erfindungsgemäßen Verfahren Dispersionen mit den oben ausführlich dargelegten Vorteilen erhalten werden können, obwohl bei der Vernetzungsreaktion die Diisocyanatgruppen blockierende Komponente, insbesondere hydrophoberMalonsäurediethylester, abgespalten wird.

Das zur Dispergierung bzw. Lösung des aus den Komponenten (A) und (B) bestehenden Gemisches verwendete organische Lösungsmittel kann vor der Umsetzung der Komponenten (A) und (B) bei einer Temperatur, die unter der zur Bildung von vernetzten Polymermikrogelteilchen notwendigen Reaktionstemperatur liegt, gegebenenfalls im Vakuum abdestilliert werden; es ist aber auch möglich, das organische Lösungsmittel im Laufe der Vernetzungsreaktion abzudestillieren.

Bei der Herstellung der Dispersionen wurde ein weiteres völlig überraschendes und vorerst schwer zu erklärendes Phänomen beobachtet: Wird die Umsetzung der Komponenten (A) und (B) bei einem Festkörper von > 30 Gew.% durchgeführt und der Festkörper der Dispersion im Laufe der Vernetzungsreaktion kontinuierlich herabgesetzt, dann entstehen Dispersionen, die ein höheres Maß an Strukturviskosität zeigen als Dispersionen, bei deren Herstellung die Komponenten (A) und (B) bei einem Festkörper unter 30 Gew.% umgesetzt worden sind.

Ganz besonders bevorzugte Ausführungsformen der Erfindung bestehen darin, daß die oben näher erläuterten Dispersionen hergestellt werden indem

(1) ein Gemisch aus den Komponenten (A) und (B) in einem wäßrigen Medium dispergiert wird wobei

- die Komponente (A) aus Polyesterpolyolen, deren Moleküle im Durchschnitt je eine Carboxylatgruppe und mindestens zwei, bevorzugt mehr als zwei Hydroxylgruppen tragen und
- die Komponente (B) aus Polyisocyanatverbindungen, die bevorzugt mehr als zwei, zumindest zum Teil mit Malonsäurediestern, bevorzugt Malonsäurediethylester, verkappte an (cyclo)aliphatische Reste gebundene Isocyanatgruppen enthalten,

besteht und wobei das Gemisch aus den Komponenten (A) und (B) in einem mit Wasser mischbaren, unter 100°C siedenden, gegenüber Isocyanatgruppen inerten organischen Lösungsmittel, bevorzugt Aceton und/oder Methylethylketon gelöst oder dispergiert wird diese Lösung oder Dispersion dann in dem wäßrigen Medium dispergiert wird und

(2) die so erhaltene Dispersion anschließend so hoch erhitzt wird daß die Komponenten (A) und (B) zu vernetzten Polymermikroteilchen umgesetzt werden,
wobei das zur Lösung bzw. Dispergierung des aus den Komponenten (A) und (B) bestehenden Gemisches benutzte Lösungsmittel entweder vor der Umsetzung der Komponenten (A) und (B) bei einer Temperatur, die unter der zur Bildung der vernetzten Mikroteilchen notwendigen Reaktionstemperatur oder bei einer Temperatur, die mindestens so hoch wie die zur Bildung der vernetzten Teilchen notwendigen Reaktionstemperatur ist, abdestilliert wird.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1:

Herstellung des Polyesterpolyols

Aus Hexandiol 1,6, Isophthalsäure und Trimellithsäureanhydrid (3:1:1) wird ein Polyester hergestellt mit einer SZ von 43 und einem OH-Äquivalentgewicht von 433. Dieser Polyester wird 80%ig in Methylethylketon gelöst.

Herstellung des verkappten Isocyanates

333 g Isophorondiisocyanat werden in 200 g Methylethylketon gelöst und 0,5 g Dibutylzinndilaurat zugegeben. Dann werden portionsweise 67 g Trimethylolpropan so zugegeben, daß die Temperatur nicht über 70°C steigt. Nach 4 Stunden beträgt der NCO-Gehalt 10 %. Dann werden 150 g Malonsäurediethylester zugegeben, in denen 1,2 g Natriumphenolat gelöst wurden. Nach 3 Stunden bei 70°C beträgt der NCO-Gehalt 3,64 %.

Herstellung einer Dispersion von vernetzten Polymermikroteilchen

500 g der Polyesterlösung und 500 g des verkappten Isocyanates werden in einem Vierhalskolben unter Rühren und unter Zugabe von zusätzlichen 200 g Methylethylketon gemischt. Zu dieser Mischung wird eine Lösung von 11 g Dimethylethanolamin in 750 g Wasser gegeben (Neutralisationsgrad 41 %). Es entsteht eine milchig-weiße Dispersion. Das Methylethylketon wird nun bei max. 50°C im Vakuum abdestilliert. Die rein-wäßrige Dispersion hat jetzt einen Festkörper von 45 %. Zu 1 ml dieser Dispersion werden in einem Reagenzglas ca. 5 ml Tetrahydrofuran gegeben. Es entsteht eine völlig klare Lösung. Jetzt wird die Dispersion unter Rühren auf 90°C erhitzt und ca. 2 h bei 90-95°C gehalten. Man erhält eine wäßrige 45%ige koagulatfreie Dispersion vernetzter Teilchen.

Beweis:

Zu 1 ml dieser Dispersion werden wieder 5 ml THF gegeben. Es entsteht eine weiß-bläulich schimmernde Dispersion, die auch durch Zugabe von Dimethylformamid nicht in Lösung geht.

Beispiel 2:

Herstellung des Polyesterpolyols

381 Teile Hexandiol-1,6 und 179 Teile Isophthalsäure werden in einen 4-Hals-Kolben, der mit Rührer, Thermometer, Gaseinleitungsrohr und einer Füllkörperkolonne ausgerüstet ist, eingewogen und unter Rühren und Einleiten eines schwachen Stickstoffstroms so aufgeheizt, daß die Kolonnenkopftemperatur 100°C und die Reaktionstemperatur 220°C nicht überschreitet. Wenn die Säurezahl unter 10 gefallen ist, wird auf 150°C abgekühlt, und es werden 206 Teile Trimellithsäureanhydrid zugegeben. Danach wird wieder so aufgeheizt, daß die Kolonnenkopftemperatur 100°C und die Reaktionstemperatur 170°C nicht überschreitet. Sobald eine Säurezahl von 45 erreicht worden ist, wird abgekühlt und mit 233 Teilen Methylethylketon verdünnt. Die erhaltene Lösung hat einen Festkörpergehalt von 75 Gew.-%.

Herstellung des verkappten Polyisocyanats

In einem Rundkolben, der mit Rückflußkühler, Rührer und Thermometer ausgestattet ist, werden 1998 Teile (9 Mol) Isophorondiisocyanat in 1200 Teilen wasserfreiem Methylethylketon gelöst und mit 3 Teilen Dibutylzinndilaurat versetzt. Nach Aufheizen auf 70°C werden 150 Teile Trimethylolpropan zugegeben und die Reaktionsmischung 1 Stunde bei 70°C gehalten. Danach werden portionsweise weitere 252 Teile Trimethylolpropan zugegeben. Zu dem so erhaltenen Zwischenprodukt (NCO-Gehalt: 9,6 %) werden 922 Teile Malonsäurediethylester zusammen mit 7,1 Teilen Natriumphenolat zugegeben. Die Reaktionsmischung wird 4 Stunden bei 70°C gehalten. Der NCO-Gehalt des Endprodukts beträgt 1,97 %. Nach Zugabe von 500 Teilen Methylethylketon wird eine 48%ige Lösung erhalten.

Herstellung einer Dispersion von vernetzten Polymermikroteilchen (Dispersion I)

In einem zylindrischen Doppelmantelglasreaktor, ausgerüstet mit Rührer, Thermometer, Rückflußkühler und Zulaufgefäß, werden 1558 Teile der in Beispiel 2 hergestellten Polyesterpolyollösung und 1208 Teile des in Beispiel 2 hergestellten verkappten Polyisocyanats eingewogen und mit 426 Teilen Methylethylketon verdünnt. Dann wird auf 50°C erwärmt, und nach etwa 1 Stunde wird unter Rühren eine Mischung aus 3385 Teilen deionisiertem Wasser und 56 Teilen Dimethylethanolamin zugegeben. Nach Abdestillieren des Methylethylketons im Vakuum bei etwa 50°C wird eine unvernetzte Teilchen enthaltende wäßrige Dispersion erhalten. Die Dispersion weist einen Festkörpergehalt von 35 Gew.-% auf. Zur Herstellung von vernetzten Polymermikroteilchen wird die so hergestellte Dispersion innerhalb 1 Stunde auf 90°C erhitzt. Etwa 2 Stunden nach Erreichen der Temperatur von 90°C beginnt die Viskosität zu steigen. Im Verlauf von weiteren 2 Stunden wird immer so viel Wasser zugegeben wie für eine gute Durchmischung notwendig ist. Insgesamt werden 7285 Teile Wasser zugegeben, so daß der Festkörpergehalt der Dispersion auf 15 Gew.-% absinkt. Die so erhaltene Dispersion wird mit Hilfe einer 10%igen wäßrigen Lösung von Dimethylethanolamin auf einen pH-Wert von 7,3 eingestellt. Viskosität, gemessen im DIN-4Becher: 25 s. Messungen mit einem Haake-Rotationsviskosimeter RV 100 zeigen, daß die Dispersion ein hohes Maß an Strukturviskosität (Pseudoplastizität) aufweist.

Die Dispersion kann durch Zugabe von großen Mengen Tetrahydrofuran, Dimethylformamid oder N-Methylpyrrolidon nicht in eine Lösung überführt werden. Somit liegen vernetzte Polymermikroteilchen vor.

Beispiel 3:

Herstellung des Polyesterpolyols

385 Teile Hexandiol-1,6 werden in einem 4-Hals-Kolben, der mit Rührer, Thermometer, Gaseinleitungsrohr und einer Füllkörperkolonne ausgerüstet ist, eingewogen und unter einem schwachen Stickstoffstrom auf 150°C aufgeheizt. Dann werden unter Rühren bei 150°C 376 Teile Trimellithsäureanhydrid zugegeben, und das Reaktionsgemisch wird so aufgeheizt, daß die Kolonnenkopftemperatur 100°C und die Reaktionstemperatur 160°C nicht übersteigt. Sobald eine Säurezahl von 122-124 erreicht worden ist, wird auf 120°C abgekühlt und das restliche Wasser im Vakuum entfernt. Nach weiterem Abkühlen wird mit 238 Teilen Methylethylketon verdünnt. Das Endprodukt weist eine Säurezahl von 107 bis 110 auf. Der Festkörpergehalt der erhaltenen Polyesterlösung beträgt 75 %.

Herstellung des verkappten Polyisocyanats

Es wird wie in Beispiel 2 beschrieben verfahren. Anstelle von 922 Teilen Malonsäurediethylester werden aber nur 872 Teile zusammen mit 6,7 Teilen Natriumphenolat eingesetzt. Der NCO-Gehalt des Endprodukts beträgt 3,15 %.

Herstellung einer Dispersion von vernetzten Polymermikroteilchen (Dispersion II)

In einem zylindrischen Doppelmantelglasreaktor, ausgerüstet mit Rührer, Thermometer, Rückflußkühler und Zulaufgefäß, werden 1181 Teile der in Beispiel 3 hergestellten Polyesterpolyollösung mit 297 Teilen Methylethylketon verdünnt. Dazu werden 1079 Teile des in Beispiel 3 hergestellten verkappten Polyisocyanats gegeben und unter Rühren vermischt. Die Mischung wird auf 50°C aufgeheizt und 1,5 Stunden bei 50° C gehalten. Danach wird unter gutem Rühren ein Mischung aus 107 Teilen Dimethylethanolamin und 2024 Teilen deionisiertem Wasser.
zugegeben. Es entsteht eine feinteilige Dispersion. Diese Dispersion wird langsam auf 90°C erhitzt. Dabei destilliert das Methylethylketon ab. Etwa 2 Stunden nach Erreichen der Temperatur von 90°C beginnt die Dispersion viskoser zu werden. Im Verlauf von weiteren 2 Stunden wird unter Aufrechterhaltung der Reaktionstemperatur von 90°C so viel Wasser zugegeben, daß eine gute Durchmischung der Dispersion gewährleistet ist. Insgesamt werden 5282 Teile Wasser zugegeben. Nach Abkühlen der Dispersion wird mit einer 1%igen Dimethylethanolaminlösung auf einen pH-Wert von 7,8 und einen Festkörpergehalt von 10 Gew.-% eingestellt. Die erhaltene Dispersion ist pseudoplastisch.

Beispiel 4:

Einsatz der Dispersionen in Basisbeschichtungszusammensetzungen für Zweischicht-Metalleffektlackierungen des Basecoat/Clearcoat-Typs

Herstellung eines Polyesterharzes gemäß DE-OS-35 45 618

In einem Reaktor, der mit einem Rührer, einem Thermometer und einer Füllkörperkolonne ausgestattet ist, werden 832 Teile Neopentylglykol eingewogen und zum Schmelzen gebracht. Dann werden 664 Teile Isophthalsäure zugegeben, und das Reaktionsgemisch wird unter Rühren so aufgeheizt, daß die Kolonnenkopftemperatur 100°C und die Reaktionstemperatur 200°C nicht übersteigt. Nach Erreichen einer Säurezahl von 8,5 wird auf 180°C abgekühlt, und es werden 384 Teile Trimellithsäureanhydrid zugegeben. Danach wird weiter verestert, bis eine Säurezahl von 39 erreicht wird. Schließlich wird mit 722 Teilen Butylglykol verdünnt. Es wird eine 70%ige Polyesterharzlösung, die nach Neutralisation mit einem Amin mit Wasser verdünnt werden kann, erhalten.

Herstellung von Basisbeschichtungszusammensetzungen

Unter Verwendung der nach dem erfindungsgemäßen Verfahren hergestellten Dispersionen und der oben beschriebenen Polyesterharzlösung werden nach allgemein bekannten Methoden zwei unterschiedliche Basisbeschichtungszusammensetzungen hergestellt. Die Zusammensetzungen der Basisbeschichtungszusammensetzungen sind der folgenden Tabelle zu entnehmen:

| | 1 | 2 |
|---|---|---|
| Dispersion I | 54,6 | - |
| Dispersion II | - | 66,8 |
| Cymel 325* | 5,3 | 4,5 |
| Polyesterharzlösung gemäß DE-OS-35 45 618 | 4,3 | 3,6 |
| Butylglykol | 9,5 | 8,0 |
| Dimethylethanolamin (10%ig in Wasser) | 3,1 | 2,8 |
| Aluminiumpaste (85 % Aluminium) | 2,7 | 2,3 |
| Wasser | 20,5 | 12,0 |
| | 100,0 | 100,0 |

\* Melamin-Formaldehyd-Harz,
Handelsprodukt der Firma American Cyanamid ("Cymel" ist ein
eingetragenes Warenzeichen)

Die erhaltenen Metallic-Basislacke weisen eine Viskosität von 34 s (DIN-4-Becher) und einen pH-Wert von 7,75 auf.

Mit diesen Basislacken wurden Zweischicht-Metalleffektlackierungen nach dem üblichen Naß-in-naß-Verfahren hergestellt. Die Lackierungen zeigten einen ausgezeichneten Metalleffekt und einen sehr guten Klarlackstand.

**Patentansprüche**

1.    Verfahren zur Herstellung von Dispersionen vernetzter Polymermikroteilchen in wäßrigen Medien, <u>dadurch gekennzeichnet,</u> daß die Dispersionen hergestellt werden, indem

(1) ein Gemisch aus den Komponenten (A) und (B) in einem wäßrigen Medium dispergiert wird wobei

-    die Komponente (A) aus einem oder mehreren mindestens 2 Hydroxylgruppen enthaltenden Polyesterpolyol(en) und - die Komponente (B) aus einer oder mehreren Polyisocyanatverbindung (en), deren Isocyanatgruppen teilweise in blockierter Form vorliegen,

besteht und wobei die Komponente (A) über eine zur Bildung einer stabilen Dispersion ausreichende Anzahl ionischer Gruppen, bevorzugt Carboxylatgruppen, verfügt und wenigstens ein Teil der Komponenten (A) und/oder (B) mehr als 2 Hydroxyl- bzw. gegebenenfalls blockierte Isocyanatgruppen pro Molekül enthält und (2) die so erhaltene Dispersion anschließend so hoch erhitzt wird, daß die Komponenten (A) und (B) zu vernetzten Polymermikroteilchen umgesetzt werden.

2.    Verfahren nach Anspruch 1.
<u>dadurch gekennzeichnet,</u> daß
als Komponente (A) ein Polyesterpolyol eingesetzt wird, dessen Moleküle im Durchschnitt je eine Carboxylatgruppe und mindestens zwei Hydroxylgruppen tragen.

3.    Verfahren nach einem der Ansprüche 1 bis 2
<u>dadurch gekennzeichnet,</u> daß
als Komponente (B) Polyisocyanatverbindungen eingesetzt werden, deren Isocyanatgruppen an (cyclo)aliphatische Reste gebunden sind und zumindest teilweise mit Malonsäurediester, bevorzugt Malonsäurediethylester, blockiert sind.

4.    Verfahren nach einem der Ansprüche 1 bis 3 <u>dadurch gekennzeichnet,</u> daß
das Gemisch aus den Komponenten (A) und (B) in Form einer Lösung bzw. Dispersion in einem mit Wasser mischbaren, unter 100° C siedenden, gegenüber Isocyanatgruppen inerten organischen Lösungsmittel bzw. Lösungsmittelgemisch, bevorzugt Methylethylketon, in dem wäßrigen Medium dispergiert wird.

5. Verfahren nach Anspruch 4
   dadurch gekennzeichnet, daß
   das organische Lösungsmittel bzw. Lösungsmittelgemisch vor der Umsetzung der Komponenten (A) und (B) bei einer Temperatur, die unter der zur Bildung von vernetzten Polymermikroteilchen notwendigen Reaktionstemperatur liegt, abdestilliert wird.

6. Verfahren nach Anspruch 4
   dadurch gekennzeichnet, daß
   das organische Lösungsmittel bzw. Lösungsmittelgemisch bei einer Temperatur abdestilliert wird, die mindestens so hoch wie die zur Bildung von vernetzten Polymermikroteilchen notwendige Reaktionstemperatur ist.

7. Verfahren nach einem der Ansprüche 1 bis 6 dadurch gekennzeichnet, daß
   die Umsetzung der Komponenten (A) und (B) zu vernetzten Polymermikroteilchen bei einem Festkörpergehalt von 30 Gew.% durchgeführt wird und der Festkörpergehalt im Laufe der Vernetzungsreaktion kontinuierlich herabgesetzt wird.

## Claims

1. Process for the preparation of dispersions of crosslinked polymer micro-particles in aqueous media, characterised in that the dispersions are prepared:

   (1) by dispersing a mixture of the components (A) and (B) in an aqueous medium, the component (A) being composed of one or more polyester-polyols containing at least 2 hydroxyl groups and the component (B) being composed of one or more polyisocyanate compounds in which the isocyanate groups are partially in the masked form, and the component (A) having available a number of ionic groups, preferably carboxylate groups, sufficient to form a stable dispersion, and at least one part of the components (A) and/or (B) containing more than 2 hydroxyl or optionally masked isocyanate groups respectively per molecule and
   (2) by subsequently heating the dispersion thus obtained to a temperature sufficiently high for the components (A) and (B) to form crosslinked polymer micro-particles.

2. Process according to Claim 1, characterised in that a polyester-polyol in which the molecules each carry, on average, one carboxylate group and at least two hydroxyl groups is employed as the component (A).

3. Process according to either of Claims 1 and 2, characterised in that polyisocyanate compounds in which the isocyanate groups are attached to (cyclo)aliphatic radicals and are at least partially masked with malonic acid diester, preferably diethyl malonate, are employed as the component (B).

4. Process according to one of Claims 1 to 3, characterised in that the mixture of the components (A) and (B) is dispersed in the aqueous medium in the form of a solution or dispersion in a water-miscible, organic solvent or solvent mixture which boils below 100°C and is inert towards isocyanate groups, preferably methyl ethyl ketone.

5. Process according to Claim 4, characterised in that the organic solvent or solvent mixture is removed by distillation before the reaction of the components (A) and (B), at a temperature below the reaction temperature required for the formation of crosslinked polymer micro-particles.

6. Process according to Claim 4, characterised in that the organic solvent or solvent mixture is removed by distillation at a temperature which is at least as high as the reaction temperature required for the formation of crosslinked polymer micro-particles.

7. Process according to one of Claims 1 to 6, characterised in that the reaction between the components (A) and (B) to give crosslinked polymer micro-particles is carried out at a solids content of 30% by weight, and the solids content is continuously reduced in the course of the crosslinking reaction.

**Revendications**

1.  Procédé de préparation de dispersions de microparticules polymères réticulées dans des milieux aqueux, caractérisé en ce que les dispersions sont préparées

    (1) en dispersant un mélange des composants (A) et (B) dans un milieu aqueux, où

    -   le composant (A) est constitué d'un ou de plusieurs polyester-polyol(s) renfermant au moins 2 groupes hydroxy, et
    -   le composant (B) est constitué d'un ou de plusieurs composé(s) polyisocyanate dont les groupes isocyanate se trouvent partiellement sous forme bloquée,

    et où le composant (A) dispose d'un nombre de groupes ioniques, de préférence de groupes carboxylate, suffisant pour la formation d'une dispersion stable, et au moins une partie des composants (A) et/ou (B) renferme plus de 2 groupes hydroxy ou groupes isocyanate éventuellement bloqués par molécule, et
    (2) en chauffant ensuite la dispersion ainsi obtenue à une température suffisamment élevée pour que les composants (A) et (a) soient transformés en micro-particules polymères réticulées.

2.  Procédé selon la revendication 1, caractérisé en ce que l'on utilise, en tant que composant (A), un polyester-polyol dont les molécules portent chacune en moyenne un groupe carboxylate et au moins deux groupes hydroxy.

3.  Procédé selon l'une quelconque des revendications 1 à 2, caractérisé en ce que l'on utilise, en tant que composant (B), des composés polyisocyanate dont les groupes isocyanate sont liés à des radicaux (cyclo)aliphatiques et sont bloqués, au moins partiellement, par un diester de l'acide malonique, de préférence l'ester diéthylique de l'acide malonique.

4.  Procédé selon l'une quelconque des revendications 1 à 3, caractérisé en ce que le mélange des composants (A) et (B) est dispersé dans le milieu aqueux sous la forme d'une solution ou d'une dispersion dans un solvant organique ou un mélange de solvants organiques miscible à l'eau, inerte vis-à-vis des groupes isocyanate et dont le point d'ébullition est inférieur à 100°C, de préférence la méthyléthylcétone.

5.  Procédé selon la revendication 4, caractérisé en ce que le solvant organique ou le mélange de solvants organiques est éliminé par distillation avant la réaction des composants (A) et (B) à une température qui se situe en dessous de la température de réaction nécessaire pour la formation de microparticules polymères réticulées.

6.  Procédé selon la revendication 4, caractérisé en ce que le solvant organique ou le mélange de solvants organiques est éliminé par distillation à une température qui est au moins aussi élevée que la température de réaction nécessaire pour la formation de microparticules polymères réticulées.

7.  Procédé selon l'une quelconque des revendications 1 à 6, caractérisé en ce que la réaction des composants (A) et (B) donnant lieu à des microparticules polymères réticulées est réalisée à une teneur en matières solides de 30% en poids et la teneur en matières solides est abaissée en continu au cours de la réaction de réticulation.